# EUROPEAN PATENT APPLICATION

(11) **EP 4 635 646 A1**
(43) Date of publication of application: **22.10.2025**
(21) Application number: 24741273.7
(22) Date of filing: 10.01.2024
(51) Int. Cl.: B21D 41/02

(54) **PIPE EXPANDER**

(30) Priority: 12.01.2023 CN 202310044245
(71) Applicant: Emerson Professional Tools (Shanghai) Co., Ltd., Shanghai 201613 (CN)
(72) Inventor: ZHOU, Qi, Shanghai 201613 (CN); CHEN, Jinan, Shanghai 201613 (CN); YANG, Xinwen, Shanghai 201613 (CN)
(74) Representative: Bardehle Pagenberg Partnerschaft mbB Patentanwälte Rechtsanwälte
(86) International application number: PCT/CN2024/071498
(87) International publication number: WO 2024/149276

(57) **Abstract**

Disclosed is a tube expander, including a driver, a chuck including multiple jaws, and a transmission assembly. The transmission assembly includes a tapered needle, a return mechanism, a pin, a pin mounting seat, and a one-way torque transmission mechanism. The tapered needle includes a conical section and a cylindrical section, with the cylindrical section provided with a guiding groove that includes an inclined section extending obliquely relative to the axis. The driver is configured to drive the tapered needle to feed along the axis towards the chuck to push the jaws to expand. The return mechanism is configured to retract the tapered needle along the axis, allowing the jaws to return to a contracted state. The pin cooperates with the guiding groove to cause the tapered needle to rotate around the axis as it moves along the axis. The one-way torque transmission mechanism is configured to transmit torque generated by rotation of the tapered needle in one direction to the chuck, and to prevent torque generated by rotation of the tapered needle in the opposite direction from being transmitted to the chuck. The present disclosure provides a tube expander with a simple and compact structure.

## Description

The present application claims the priority to the Chinese Patent Application No. 202310044245.3, titled "TUBE EXPANDER", filed on January 12, 2023 with the China National Intellectual Property Administration, which is incorporated herein by reference in its entirety.

### FIELD

The present disclosure relates to the tools used in the field of tubing, and in particular to a tube expander.

### BACKGROUND

The contents of this section provide only background information relevant to the present disclosure, which may not constitute the conventional technology.

When a tube is connected to another tube or to other devices (e.g. fittings or a manifold), a tube expander is generally used to expand an inner diameter of the tube. A common tube expander includes a chuck composed of multiple jaws. The jaws in a contracted state jointly define a tapered (e.g., frustoconical) chuck end which can extend into the tube to be expanded. Then, the jaws of the chuck can expand radially outward, thereby expanding the inner diameter of the tube. In order to uniformly expand the tube, it is generally required to contract the chuck and rotate it by a predetermined angle (such as 60 degrees) after each expansion, and then to expand the chuck again until the chuck is rotated by 360 degrees or more. The mechanical structure of the existing tube expander for achieving the expansion and rotation of the chuck is generally complicated.

### SUMMARY

An object of the present disclosure is to provide a tube expander with a simple and compact structure to reduce the volume and weight of the tube expander.

Another object of the present disclosure is to achieve the expansion and rotation of a chuck of the tube expander with a simple mechanical structure.

A tube expander is provided according to one aspect of the present disclosure. The tube expander includes: a driver; a chuck including multiple jaws that are movable between a contracted state, in which the multiple jaws abut against one another and jointly define a tapered chuck end, and an expanded state, in which the multiple jaws expand radially outward; and a transmission assembly, where the transmission assembly is configured to transmit power of the driver to the chuck, so as to drive the multiple jaws to expand the chuck and to rotate around an axis of the tube expander. The transmission assembly includes: a tapered needle including a conical section and a cylindrical section, where the cylindrical section is provided with a guiding groove including an inclined section extending obliquely relative to the axis, and the driver is configured to drive the tapered needle to advance along the axis towards the chuck, allowing the conical section to push the plurality of jaws to transition from the contracted state to the expanded state; a return mechanism, where the return mechanism is configured to retract the tapered needle away from the chuck along the axis of the tube expander, so that the multiple jaws are switched from the expanded state to the contracted state; a pin and a pin mounting seat, where the pin is disposed in the pin mounting seat and at least a part of the pin is received in the guiding groove, and the pin is capable of cooperating with the inclined section of the guiding groove, enabling the tapered needle to rotate around the axis while moving along the axis; and a one-way torque transmission mechanism, where the one-way torque transmission mechanism is configured to transmit torque to the chuck, the torque generated by rotation of the tapered needle in one direction, and not to transmit torque to the chuck during rotation of the tapered needle in the opposite direction.

In some embodiments, the one-way torque transmission mechanism may include a one-way bearing. An inner ring of the one-way bearing is arranged around the cylindrical section of the tapered needle to rotate therewith, and an outer ring of the one-way bearing is coupled to the chuck. The one-way bearing is configured such that when the inner ring rotates in one direction, the inner ring and the outer ring are locked together to transmit torque to the outer ring, and when the inner ring rotates in the opposite direction, the inner ring rotates freely relative to the outer ring without transmitting torque to the outer ring.

In some embodiments, the transmission assembly includes a chuck driving sleeve arranged around the outer ring of the one-way bearing to rotate therewith. The chuck driving sleeve includes end face teeth that mesh with end face teeth on the chuck to transmit torque to the chuck.

In some embodiments, the one-way torque transmission mechanism may include a ratchet disk arranged around the cylindrical section of the tapered needle to rotate therewith. The ratchet disk is coupled to the chuck through end face ratchet teeth, such that when the ratchet disk rotates in one direction, it transmits torque to the chuck through the end face ratchet teeth, and when the ratchet disk rotates in the opposite direction, the end face ratchet teeth slip, preventing the torque from being transmitted to the chuck.

In some embodiments, the transmission assembly may include a chuck driving sleeve. End face ratchet teeth for cooperating with the end face ratchet teeth of the ratchet disk are provided on one side of the chuck driving sleeve, and end face teeth that mesh with the end face teeth on the chuck to transmit torque to the chuck are provided on the opposite side of the chuck driving sleeve.

In some embodiments, the transmission assembly may include a cam or eccentric wheel connected to an output shaft of the driver. When the cam or the eccentric wheel rotates, the cam or the eccentric wheel periodically pushes the tapered needle to advance along the axis towards the chuck.

In some embodiments, the return mechanism may include a spring configured to bias the tapered needle towards the cam or the eccentric wheel.

In some embodiments, the guiding groove may extend through the cylindrical section of the tapered needle.

In some embodiments, the pin mounting seat may be configured as a sleeve surrounding the cylindrical section of the tapered needle. A wall of the sleeve is provided with a pair of pin holes aligned in a radial direction, and the pin is fixed by passing through the pair of pin holes and the guiding groove.

In some embodiments, the guiding groove may further include a straight section extending along the axis. The straight section is connected to the inclined section, and the inclined section is located on the side of the tapered needle adjacent to the conical section.

In some embodiments, the guiding groove may be configured in a spiral shape relative to the axis.

In some embodiments, the one-way torque transmission mechanism may be configured to transmit torque to the chuck, generated by rotation of the tapered needle during its feed towards the chuck, and configured to restrict transmitting torque to the chuck, during its retraction away from the chuck.

On the one hand, the tapered needle in the tube expander according to the present disclosure is provided with an inclined or spiral guiding groove. By engaging a fixed pin with the guiding groove, the tapered needle can be constrained to rotate along its axis while performing axial reciprocal motion. On the other hand, the tube expander according to the present disclosure is provided with a one-way torque transmission mechanism, which allows the torque generated when the tapered needle rotates in one direction (for example, during the feeding process) to be transmitted to the chuck and drive the chuck to rotate accordingly. Based on the above two aspects, a simple mechanical structure is used according to the present disclosure to achieve the expansion and rotation of the chuck of the tube expander, which is beneficial to reducing the size, weight, and number of parts of the tube expander.

### BRIEF DESCRIPTION OF THE DRAWINGS

Hereinafter, the embodiments of the present disclosure are described by way of example only with reference to the drawings. In the drawings, the same features or components are denoted by the same reference numerals, and the drawings are not necessarily drawn to scale. In the accompanying drawings:
FIG. 1 shows a perspective view of a tube expander according to a first embodiment of the present disclosure;
FIG. 2 shows a longitudinal cross-sectional view of the tube expander taken along axis A in FIG. 1;
FIG. 3 and FIG.4 show exploded views of the tube expander in FIG. 1 from different perspectives;
FIG. 5 shows a perspective view of a tapered needle of the tube expander in FIG. 1;
FIG. 6 shows a schematic perspective view of a one-way bearing of the tube expander in FIG. 1;
FIG. 7 shows a central cross-sectional view of the one-way bearing in FIG. 6;
FIG. 8 shows a perspective view of a tube expander according to a second embodiment of the present disclosure;
FIG. 9 shows a longitudinal cross-sectional view of the tube expander taken along axis A' in FIG. 8;
FIG. 10 and FIG. 11 show exploded views of the tube expander in FIG. 8 from different perspectives;
FIG. 12 shows a top view of a tube expander according to a third embodiment of the present disclosure.

### DETAILED DESCRIPTION OF THE EMBODIMENTS

The following description is essentially only illustrative, rather than intending to limit the present disclosure and the application or usage thereof. It should be appreciated that, throughout all drawings, similar reference signs indicate the same or similar parts or features. Each drawing only illustratively shows the concept and principle of the embodiments of the present disclosure, and does not necessarily show the specific dimensions and scales of various embodiments of the present disclosure. Specific parts in specific drawings may be exaggerated to illustrate related details or structures of various embodiments of the present disclosure.

In the description of the embodiments of the present disclosure, the orientation terms related to "upper" and "lower" used herein are described according to the upper and lower position relationships of the views shown in the accompanying drawings. In practical applications, the positional relationships of "upper" and "lower" used herein may be defined based on actual conditions. These relationships may be reversed.

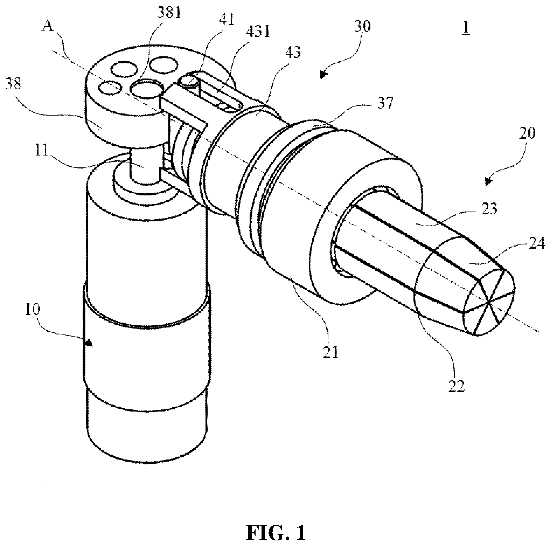

First, a structure and a working principle of a tube expander 1 according to a first embodiment of the present disclosure are described with reference to FIG. 1 to FIG. 7.

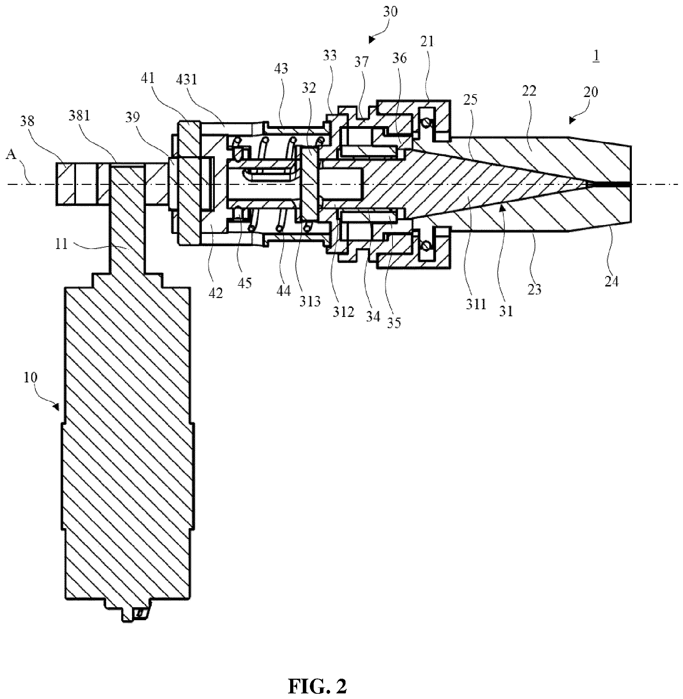

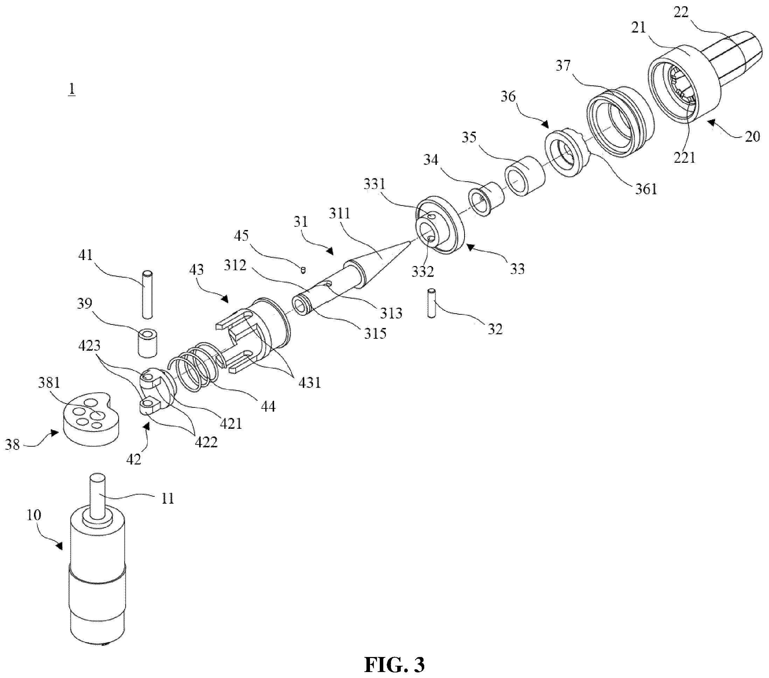

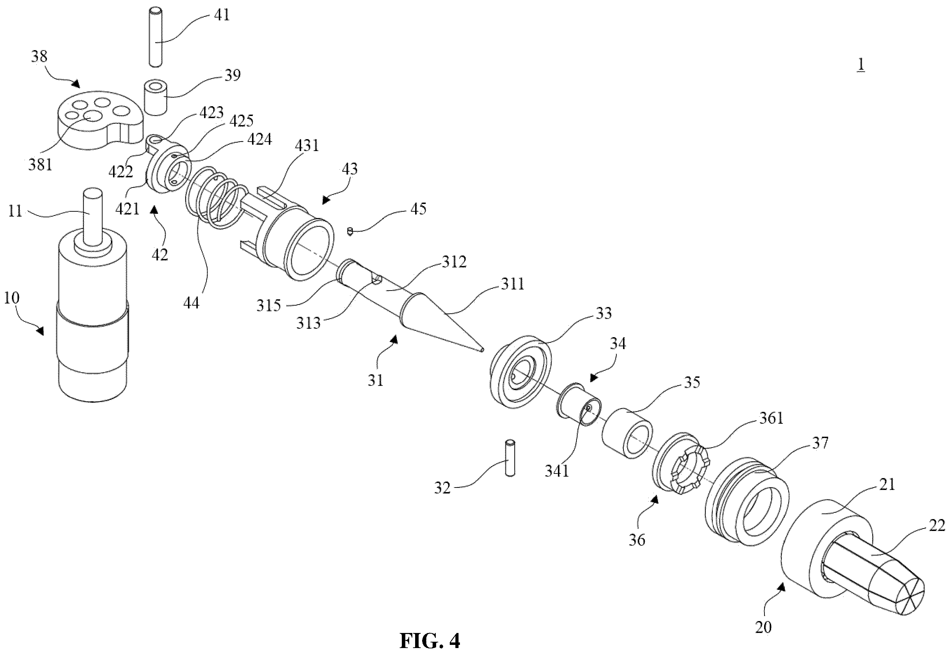

FIG. 1 shows a perspective view of a tube expander 1 according to a first embodiment of the present disclosure. FIG. 2 shows a longitudinal cross-sectional view of the tube expander 1 taken along axis A in FIG. 1. FIG. 3 and FIG.4 show exploded views of the tube expander 1 from different perspectives.

As shown in FIGS. 1 to 2, the tube expander 1 generally includes a driver 10, a chuck 20 and a transmission assembly 30. In this embodiment, the driver 10 is a motor. The chuck 20 may include a mounting ring 21 and multiple jaws 22 (six jaws 22 in this embodiment) coupled to the mounting ring 21 along an inner circumferential surface of the mounting ring 21, and each jaw has the same shape. In other embodiments, a structure different from the mounting ring 21 may be used to couple the multiple jaws. FIGS. 1 to 2 show a contracted state of the jaws 22. In this contracted state, the jaws 22 abut against one another to jointly define a cylindrical section 23 and a tapered chuck end 24. As shown in FIG. 2, in the contracted state, the jaws 22 jointly define a conical hollow internal chamber 25. Each jaw 22 can move radially outward relative to the mounting ring 21 to an expanded state (not shown), in which the jaws 22 are separated from each other, allowing the cylindrical section 23 and the chuck end 24 to be expanded radially outward. Furthermore, the chuck 20 is rotatable about the axis A as a whole. The transmission assembly 30 is configured to transmit the power of the driver 10 to the chuck 20 to drive the jaws 22 to expand and the chuck 20 to rotate.

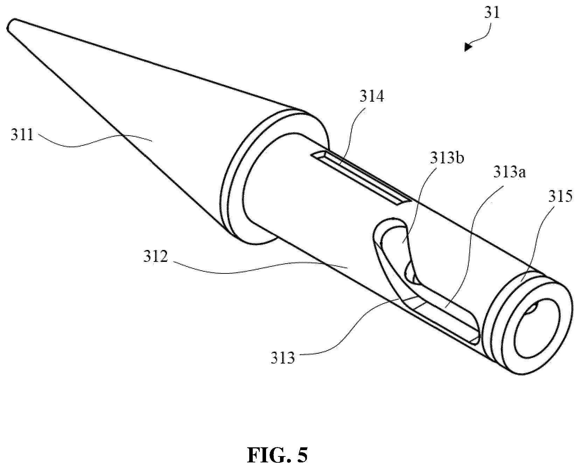

As shown in FIGS. 2 to 4, the transmission assembly 30 includes a tapered needle 31. FIG. 5 shows a perspective view of the tapered needle 31. The tapered needle 31 includes a conical section 311 and a cylindrical section 312. As shown in FIG. 2, when the jaws 22 are in the contracted state, the conical section 311 of the tapered needle 31 is received in the hollow internal chamber 25 defined by the jaws 22. The tapered needle 31 may move along the axis A. While the tapered needle 31 advances toward the chuck end 24, the conical section 311 of the tapered needle 31 uniformly pushes the jaws 22 to move radially outward relative to the mounting ring 21. While the tapered needle 31 retracts away from the chuck end 24, the jaws 22 can be restored to the contracted state. As shown in FIG. 2, in this embodiment, a part of the cylindrical section 312 is designed to be hollow, thereby reducing the material and weight of the tapered needle 31. In this embodiment, the conical section 311 and the cylindrical section 312 of the tapered needle 31 are integrally formed. However, the present disclosure is not limited thereto, and in other embodiments, the tapered needle can also be configured as a split component.

As shown in FIG. 5, the cylindrical section 312 of the tapered needle 31 is provided with a guiding groove 313 that extends through the cylindrical section 312. In this embodiment, the guiding groove 313 includes a straight section 313a extending in an axial direction and an inclined section 313b extending obliquely relative to the axial direction from the straight section 313a, with the inclined section 313b located on a side adjacent to the conical section 311 of the tapered needle 31. As shown in FIGS. 2 and 3, the transmission assembly 30 may further include a pin 32 and a pin mounting seat 33. In this embodiment, the pin mounting seat 33 is configured as a sleeve surrounding the cylindrical section 312 of the tapered needle 31, with a pair of pin holes 331, 332 provided on its cylindrical wall and aligned in a radial direction. As can be clearly seen from FIG. 2, the pin 32 is fixed by passing through the guiding groove 313 of the tapered needle 31 and the pin holes 331, 332 of the pin mounting seat 33, thereby coupling the tapered needle 31 to the pin mounting seat 33. When the tapered needle 31 moves along the axis A, the pin 32 and the pin mounting seat 33 remain fixed, and the guiding groove 313 of the tapered needle 31 cooperates with the pin 32 to constrain the movement of the tapered needle 31. When the inclined section 313b of the guiding groove 313 of the tapered needle 31 is engaged with the pin 32, the tapered needle 31 will simultaneously rotate about the axis A as it moves along the axis A, and the direction of rotation when the tapered needle 31 advances towards the chuck 20 is opposite to the direction of rotation when the tapered needle 31 retracts. In other embodiments, it is also conceivable that the guiding groove may have different shapes, for example, the straight section of the guiding groove can be omitted, or a spiral guiding groove can be provided. Furthermore, the guiding groove may not extend through the cylindrical section of the tapered needle. For example, it is conceivable that a non-through guiding groove may be provided on one side or opposite sides of the cylindrical section of the tapered needle, as long as at least a part of the pin is received in the guiding groove to achieve the cooperation between the pin and the guiding groove to constrain the movement of the tapered needle. In other embodiments, it may be provided that the pin mounting seat is of different shapes, and the pin is integrally formed with the pin mounting seat.

As shown in FIG. 5, a keyway 314 extending in the direction of axis A is further provided on the cylindrical section 312 of the tapered needle 31. As shown in FIGS. 2 to 4, the transmission assembly 30 may further include a bushing 34 for mounting on the cylindrical section 312 of the tapered needle 31. Referring to FIG. 4, a key 341 protruding radially inward is provided on an inner circumferential surface of the bushing 34, and the key 341 is used to fit into the keyway 314 on the cylindrical section 312 of the tapered needle 31 to allow the bushing 34 to rotate together with the tapered needle 31. In other embodiments, the bushing 34 may also be omitted.

As shown in FIGS. 2 to 4, the transmission assembly 30 may further include a one-way bearing 35 and a chuck driving sleeve 36. As shown in FIGS. 3 and 4, end face teeth 361 are provided on an end face of the chuck driving sleeve 36 facing the chuck end 24, and end face teeth 221 are provided on an end face of each jaw 22 of the chuck 20 facing the chuck driving sleeve 36. The end face teeth 361 of the chuck driving sleeve 36 mesh with the end face teeth 221 of the jaws 22 of the chuck 20 to transmit torque from the chuck driving sleeve 36 to the chuck 20. In other embodiments, the chuck driving sleeve 36 can be omitted or integrally formed with the chuck 20. As shown in FIG. 2, the one-way bearing 35 is arranged between the bushing 34 and the chuck driving sleeve 36, that is, an inner ring of the one-way bearing 35 is arranged around the tapered needle 31 and the bushing 34, and the chuck driving sleeve 36 is arranged around an outer ring of the one-way bearing 35. The inner ring of the one-way bearing 35 can rotate together with the tapered needle 31 and the bushing 34, the outer ring of the one-way bearing 35 can rotate together with the chuck driving sleeve 36, and the one-way bearing 35 can only transmit torque in one direction from the inner ring to the outer ring. When the inner ring of the one-way bearing 35 rotates in one direction, the inner and outer rings are locked together, allowing the torque to be transmitted from the inner ring to the outer ring, and the outer ring can rotate together with the inner ring. When the inner ring of the one-way bearing 35 rotates in an opposite direction, the inner ring can rotate freely relative to the outer ring, thus the torque cannot be transmitted from the inner ring to the outer ring. Therefore, through the one-way bearing 35, the chuck driving sleeve 36 can be driven to rotate, and thus drive the chuck 20 to rotate, only when the tapered needle 31 and the bushing 34 rotate in one direction. In this embodiment, the one-way bearing 35 is preferably installed to drive the chuck driving sleeve 36 and the chuck 20 to rotate only when the tapered needle 31 advances towards the chuck 20 and rotates. In other embodiments, the one-way bearing 35 can be installed in a reverse direction, that is, to drive the chuck driving sleeve 36 and the chuck 20 to rotate when the tapered needle 31 retracts and rotates.

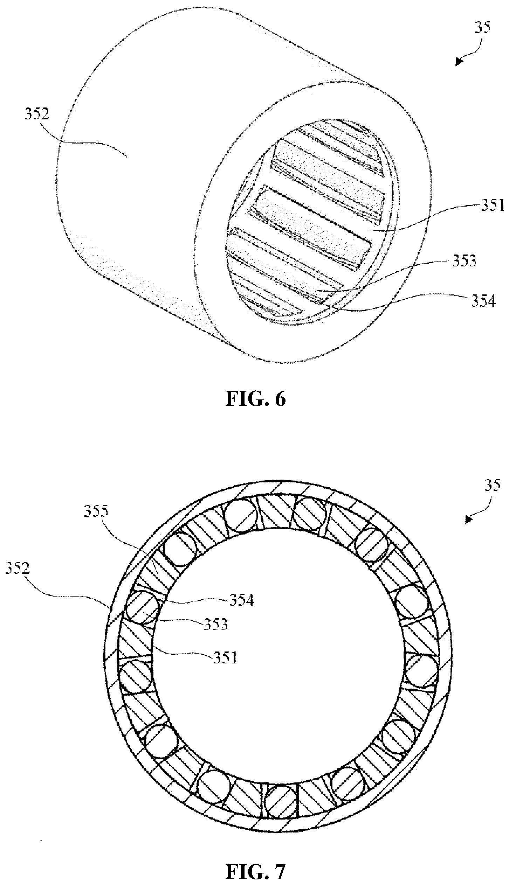

In this embodiment, the one-way bearing 35 is a one-way needle bearing. FIG. 6 shows an exemplary perspective view of the one-way bearing 35, and FIG. 7 shows a central cross-sectional view of the one-way bearing 35. As shown in FIGS. 6 and 7, multiple needles 353, springs 354, and wedge blocks 355 are uniformly arranged between the inner ring 351 and the outer ring 352 of the one-way bearing 35. Each needle 353 and the spring 354 located on one side of the needle 353 are clamped between two adjacent wedge blocks 355, with the spring 354 biasing the needle 353 towards the wedge blocks 355. In the illustrated embodiment, each spring 354 is arranged on a clockwise side of each needle 353. When the inner ring 351 rotates relative to the outer ring 352 of the one-way bearing 35 in a direction that compresses the springs 354 (clockwise in FIG. 7), the inner ring 351 can rotate freely relative to the outer ring 352, and the inner ring 351 does not transmit the torque to the outer ring. When the inner ring 351 of the one-way bearing 35 rotates in the opposite direction (counterclockwise in FIG. 7), the spring 354 locks the needle 353 against the wedge block 355, thereby locking the inner ring 351, the outer ring 352, and the needles 353 of the one-way bearing 35 as one unit. At this point, the inner ring 351 can transmit the torque to the outer ring 352. In other embodiments, any other suitable type of one-way bearing may also be used.

As shown in FIGS. 2 to 4, a support sleeve 37 or other support or connecting components can be provided as needed between the chuck driving sleeve 36 and the mounting ring 21 of the chuck 20.

In this embodiment, the driver 10 periodically drives the tapered needle 31 to advance axially through a cam mechanism. As shown in FIGS. 1 to 4, the transmission assembly 30 may further include a cam 38, a roller 39 cooperating with the cam 38, a roller shaft 41, a roller shaft mount 42, a housing 43, and a spring 44. The cam 38 is connected to an output shaft 11 of the driver 10 through a mounting hole 381 thereon, enabling it to rotate with the output shaft 11. As shown in FIG. 3, the roller shaft mount 42 includes a plate-like body 421 with a pair of oppositely disposed lugs 422 on one side of the body 421, each of the lugs 422 provided with a hole 423. The roller shaft 41 passes through the holes 423 and the roller 39 to couple the roller 39 between the two lugs 422. As shown in FIG. 4, an opposite side of the body 421 of the roller shaft mount 42 is provided with a cylindrical portion 424, which is configured to receive the end of the cylindrical section 312 of the tapered needle 31. A pair of opposite holes 425 are provided on the wall of the cylindrical portion 424. Correspondingly, referring to FIGS. 2 to 5, an annular groove 315 is provided near the end of the cylindrical section 312 of the tapered needle 31, and a pin 45 can pass through the holes 425 on the cylindrical portion 424 and extend into the annular groove 315, thereby coupling the tapered needle 31 to the roller shaft mount 42 and allowing the tapered needle 31 to rotate relative to the roller shaft mount 42.

Referring to FIGS. 3 and 4, the housing 43 is generally cylindrical and defines two guide slots 431 extending in the direction of the axis A, which are used to receive and guide the two ends of the roller shaft 41, respectively. As shown in FIG. 2, in the assembled state, the roller 39, the roller shaft 41, the roller shaft mount 42, and a part of the tapered needle 31 are received in the housing 43. The housing 43 is fixed against the pin mounting seat 33, and the spring 44 is arranged in the housing 43 between the roller shaft mount 42 and the pin mounting seat 33. The spring 44 biases the roller shaft mount 42 and the connected roller 39 against the cam 38.

As shown in FIGS. 1 and 2, in the initial position, the roller 39 contacts the most proximal point of the cam 38, the pin 32 is located at a front end of the inclined section 313b of the guiding groove 313 of the tapered needle 31, and the jaws 22 of the chuck 20 are in a retracted state. At this point, the tapered chuck end 24 can be inserted into the tube to be expanded.

As the cam 38 is driven by the driver 10 to rotate, the contact point between the cam 38 and the roller 39 gradually transitions from the most proximal point of the cam to its most distal point. With the constraint of the roller shaft 41 by the guiding groove 431 in the housing 43, the cam 38 pushes the roller 39 and the roller shaft mount 42 to move towards the chuck 20 along the direction of the axis A. Consequently, the roller shaft mount 42 overcomes the elastic force of the spring 44 and pushes the tapered needle 31 to move towards the chuck 20 along the direction of the axis A. Due to the constraint by the inclined section 313b of the guiding groove 313 in the tapered needle 31 and the pin 32 passing through the guiding groove 313, the tapered needle 31 rotates around the axis A as it begins to advance axially towards the chuck 20, driving the bushing 34 to rotate as well. The one-way bearing 35 transfers the torque from the bushing 34 to the chuck driving sleeve 36 and subsequently to the chuck 20, thereby rotating the chuck 20 by a predetermined angle. Subsequently, the tapered needle 31 continues to advance. When the straight section 313a of the guiding groove 313 in the tapered needle 31 starts to engage with the pin 32, the tapered needle 31 only advances axially without rotating. The conical section 311 of the tapered needle 31 pushes the jaws 22 of the chuck 20 to expand radially outward relative to the mounting ring 21, thereby expanding the tube fitted onto the chuck end 24.

Subsequently, the cam 38 is continuously driven by the driver 10 to rotate, causing the contact point between the cam 38 and the roller 39 to quickly shift from the most distal point of the cam to its most proximal point. The spring 44 biases the roller shaft mount 42 and the connected tapered needle 31 back to their initial positions towards the cam 38. The tapered needle 31 rotates in the opposite direction during retraction, however, the one-way bearing 35 does not transmit this reverse rotation to the chuck 20. That is, in this embodiment, the chuck 20 only rotates by a predetermined angle during the initial stage of axial feed of the tapered needle 31 (i.e., when the inclined section 313b of the guiding groove 313 of the tapered needle 31 engages with the pin 32). The chuck 20 does not rotate during the later stage of axial feed of the tapered needle 31 (i.e., when the straight section 313a of the guiding groove 313 of the tapered needle 31 engages with the pin 32) or during the axial retraction of the tapered needle 31. Therefore, the chuck 20 can be rotated by a predetermined angle at first when the jaws 22 are substantially in the contracted state and then expands. Rotating the jaws 22 when the jaws are substantially in the contracted state can effectively prevent the friction of the tube to be expanded from hindering the rotation of the jaws 22.

Subsequently, the above process is repeated until the chuck 20 rotates by 360 degrees, so as to uniformly expand an inner diameter of the tube.

The present disclosure further includes a further variant of the tube expander 1 according to the above first embodiment.

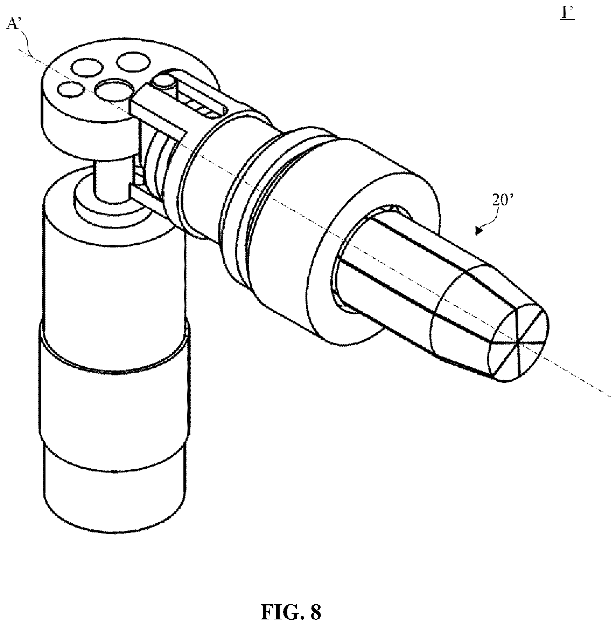

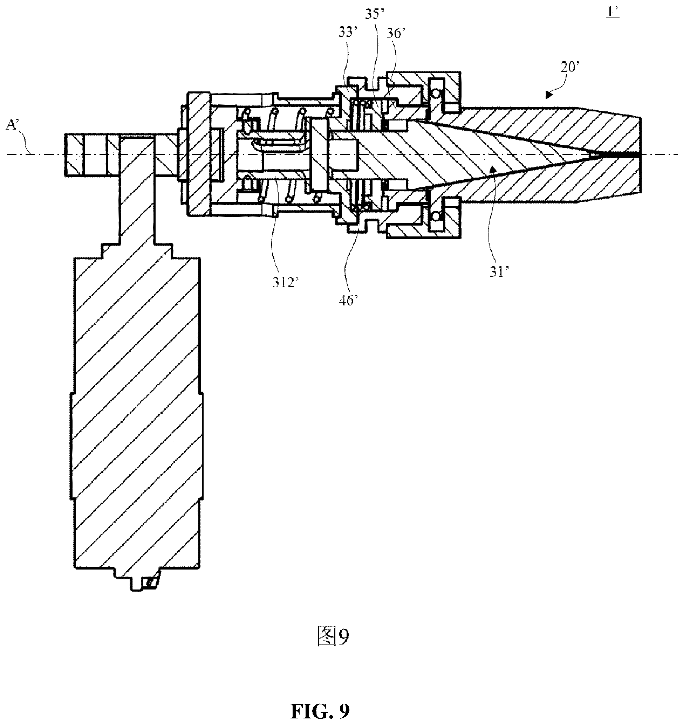

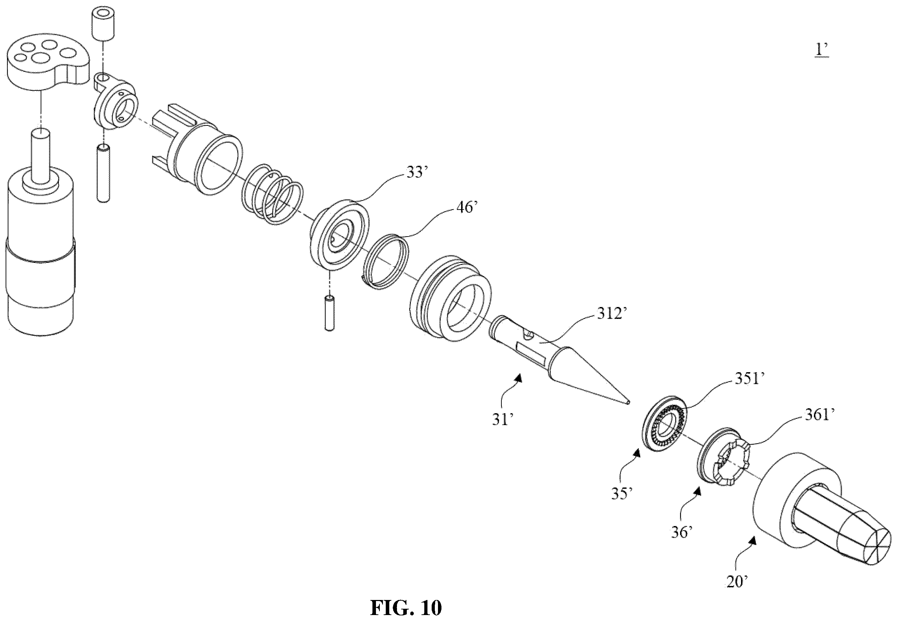

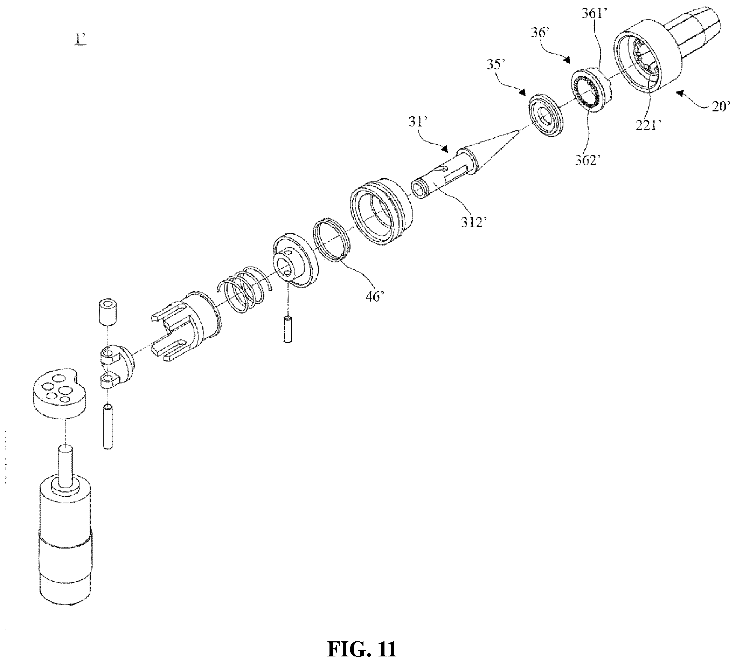

FIGS. 8 to 11 show a tube expander 1' according to a second embodiment of the present disclosure. FIG. 8 shows a perspective view of the tube expander 1'. FIG. 9 shows a longitudinal cross-sectional view of the tube expander 1' taken along axis A' in FIG. 8. FIGS. 10 and 11 show exploded views of the tube expander 1' viewed from different perspectives.

The main difference between this embodiment and the first embodiment is that in the first embodiment, the one-way bearing 35 is used to achieve one-way torque transmission between the tapered needle and the chuck, whereas in this embodiment, a ratchet disk 35' is used to replace the one-way bearing 35 as the one-way torque transmission mechanism between the tapered needle and the chuck.

As shown in FIGS. 9 to 11, the ratchet disk 35' is generally annular and disposed between the pin mounting seat 33' and the chuck driving sleeve 36', with the ratchet disk 35' pressed against the chuck driving sleeve 36' by a spring 46'. The ratchet disk 35' is arranged around the cylindrical section 312' of the tapered needle 31' and is coupled to the cylindrical section 312' of the tapered needle 31', for example, through a key-slot engagement structure, so as to rotate with the tapered needle 31'. Similar to the previous embodiment, as shown in FIGS. 10 and 11, end face teeth 361' and end face teeth 221' are respectively provided on the mutually facing end faces of the chuck driving sleeve 36' and the chuck 20', with the end face teeth 361' and the end face teeth 221' meshing with each other to transmit the torque from the chuck driving sleeve 36' to the chuck 20'. Additionally, as shown in FIG. 10, end face ratchet teeth 351' are provided on a side of the ratchet disk 35' facing the chuck driving sleeve 36'. Correspondingly, as shown in FIG. 11, end face ratchet teeth 362' are provided on a side of the chuck driving sleeve 36' facing the ratchet disk 35'. When the ratchet disk 35' rotates relative to the chuck driving sleeve 36' in one direction (for example, when the tapered needle 31' advances axially and rotates), the end face ratchet teeth 351' of the ratchet disk 35' mesh with the end face ratchet teeth 362' of the chuck driving sleeve 36', allowing the torque to be transmitted from the ratchet disk 35' to the chuck driving sleeve 36' and thus driving the chuck 20' to rotate. When the ratchet disk 35' rotates relative to the chuck driving sleeve 36' in the opposite direction (for example, when the tapered needle 31' retracts axially and rotates), the end face ratchet teeth 351' of the ratchet disk 35' slip relative to the end face ratchet teeth 362' of the chuck driving sleeve 36', preventing the torque from being transmitted from the ratchet disk 35' to the chuck driving sleeve 36' and thus the chuck 20' does not rotate. In other embodiments, the chuck driving sleeve 36' may be omitted, and the ratchet disk 35' may directly engage with end face ratchet teeth provided on the chuck. Other aspects of this embodiment may be the same as or similar to those of the first embodiment and will not be repeated here. In other embodiments, other alternative one-way torque transmission mechanisms may be used to achieve one-way torque transmission between the tapered needle and the chuck.

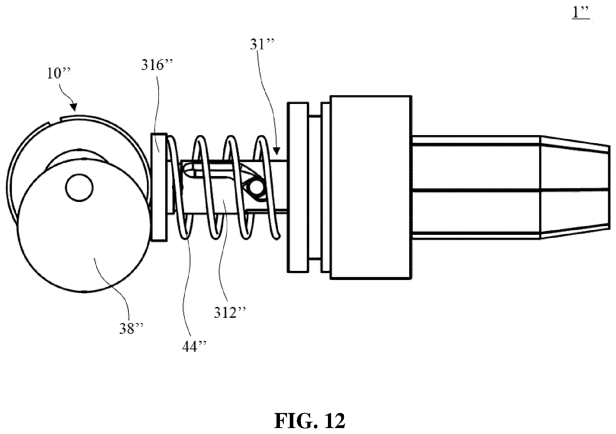

FIG. 12 shows a top view of a tube expander 1" according to a third embodiment of the present disclosure. For clarity, components similar to the housing 43 and the pin mounting seat 33 in the first embodiment are not shown in FIG. 12. The main difference between this embodiment and the first embodiment is the use of an eccentric wheel 38" instead of the cam 38 in the first embodiment to periodically push the tapered needle axially forward. In this embodiment, a plate-like member 316" is provided at the end of the cylindrical section 312" of the tapered needle 31", and a spring 44" is disposed between the plate-like member 316" and the pin mounting seat (not shown). The driver 10" drives the eccentric wheel 38" to rotate. As the contact point between the eccentric wheel 38" and the plate-like member 316" gradually transitions from the proximal end periphery of the eccentric wheel 38" to its distal end periphery, the eccentric wheel 38" pushes the tapered needle 31" axially forward through the plate-like member 316". As the eccentric wheel 38" continues to rotate, the contact point between the eccentric wheel 38" and the plate-like member 316" gradually transitions from the distal end periphery of the eccentric wheel 38" back to the proximal end periphery, and the spring 44" biases the plate-like member 316" towards the eccentric wheel 38", thereby retracting the tapered needle 31". Other aspects of this embodiment may be the same as or similar to those of the previous embodiments and will not be repeated here.

Furthermore, in the aforementioned embodiments, a spring is used as the return mechanism to retract the tapered needle, but the present disclosure is not limited thereto. In other embodiments, any other suitable type of the return mechanism may be provided. For example, a circular T-slot may be provided along the periphery of the cam or eccentric wheel, and a pin that is fixed at one end within the T-slot and can slide freely within the T-slot may be used to directly connect the cam or eccentric wheel to the tapered needle. Alternatively, a magnetic return mechanism may also be employed.

A tube expander with a simple and compact structure is provided according to the present disclosure, including a tapered needle with inclined or spiral guiding grooves and a one-way torque transmission device, thereby achieving the expansion and rotational movement of the chuck of the tube expander through a simple mechanical structure. Preferably, the one-way torque transmission device can be arranged to transmit the torque to the chuck only when the tapered needle advances forward, so that the chuck rotates first when the jaws are substantially in the contracted state and then expands, thereby effectively avoiding the friction effect of the tube on the chuck end from hindering the rotation of the chuck, and facilitating uniform expansion of the tube.

The exemplary embodiments of the tube expander according to the present disclosure have been described in detail, but it should be understood that the present disclosure is not limited to the specific embodiments described and shown in detail above. Various modifications and variations can be made by those skilled in the art to the present disclosure, without departing from the spirit and scope of the present disclosure. All these modifications and variations fall within the scope of the present disclosure. Moreover, all of the components described herein may be replaced by other technically equivalent components.

## Claims

1. A tube expander, comprising:
a driver;
a chuck, wherein the chuck comprises a plurality of jaws which are movable between a contracted state and an expanded state, in the contracted state, the plurality of jaws abut against one another and jointly define a tapered chuck end, and in the expanded state, the plurality of jaws expand radially outward; and
a transmission assembly, wherein the transmission assembly is configured to transmit power of the driver to the chuck, so as to drive the plurality of jaws to expand and the chuck to rotate around an axis of the tube expander,
**characterized in that**, the transmission assembly comprises:
a tapered needle comprising a conical section and a cylindrical section, wherein the cylindrical section is provided with a guiding groove comprising an inclined section extending obliquely relative to the axis, and the driver is configured to drive the tapered needle to advance along the axis towards the chuck, allowing the conical section to push the plurality of jaws to transition from the contracted state to the expanded state;
a return mechanism, wherein the return mechanism is configured to retract the tapered needle away from the chuck along the axis, so that the plurality of jaws are switched from the expanded state to the contracted state;
a pin and a pin mounting seat, wherein the pin is disposed in the pin mounting seat and at least a part of the pin is received in the guiding groove, and the pin is capable of cooperating with the inclined section of the guiding groove, enabling the tapered needle to rotate around the axis while moving along the axis; and
a one-way torque transmission mechanism, wherein the one-way torque transmission mechanism is configured to transmit torque generated by rotation of the tapered needle in one direction to the chuck, and not to transmit torque generated by rotation of the tapered needle in an opposite direction to the chuck.

2. The tube expander according to claim 1, wherein the one-way torque transmission mechanism comprises a one-way bearing, an inner ring of which is arranged around the cylindrical section of the tapered needle to rotate therewith, and an outer ring of which is coupled to the chuck, the one-way bearing being configured such that when the inner ring rotates in one direction, the inner ring and the outer ring are locked together to transmit torque to the outer ring, and when the inner ring rotates in the opposite direction, the inner ring rotates freely relative to the outer ring without transmitting torque to the outer ring.

3. The tube expander according to claim 2, wherein the transmission assembly comprises a chuck driving sleeve arranged around the outer ring of the one-way bearing to rotate with the outer ring, and the chuck driving sleeve comprises end face teeth that mesh with end face teeth on the chuck to transmit torque to the chuck.

4. The tube expander according to claim 1, wherein the one-way torque transmission mechanism comprises a ratchet disk arranged around the cylindrical section of the tapered needle to rotate therewith, the ratchet disk being coupled to the chuck through end face ratchet teeth, such that when the ratchet disk rotates in one direction, the ratchet disk transmits torque to the chuck through the end face ratchet teeth, and when the ratchet disk rotates in the opposite direction, the end face ratchet teeth slip, preventing the torque from being transmitted to the chuck.

5. The tube expander according to claim 4, wherein the transmission assembly comprises a chuck driving sleeve, with end face ratchet teeth provided on one side of the chuck driving sleeve for cooperating with the end face ratchet teeth of the ratchet disk, and with end face teeth provided on an opposite side of the chuck driving sleeve that mesh with end face teeth on the chuck to transmit torque to the chuck.

6. The tube expander according to claim 1, wherein the transmission assembly comprises a cam or an eccentric wheel connected to an output shaft of the driver, and when the cam or the eccentric wheel rotates, it periodically pushes the tapered needle to advance along the axis towards the chuck.

7. The tube expander according to claim 6, wherein the return mechanism comprises a spring configured to bias the tapered needle towards the cam or the eccentric wheel.

8. The tube expander according to claim 1, wherein the guiding groove extends through the cylindrical section of the tapered needle.

9. The tube expander according to claim 8, wherein the pin mounting seat is configured as a sleeve surrounding the cylindrical section of the tapered needle, a wall of the sleeve being provided with a pair of pin holes aligned in a radial direction, and the pin is fixed by passing through the pair of pin holes and the guiding groove.

10. The tube expander according to claim 1, wherein the guiding groove further comprises a straight section extending along the axis, the straight section being connected to the inclined section, and the inclined section being located on a side of the tapered needle close to the conical section.

11. The tube expander according to claim 1, wherein the guiding groove is configured in a spiral shape relative to the axis.

12. The tube expander according to any one of claims 1 to 11, wherein the one-way torque transmission mechanism is configured to transmit torque to the chuck, generated by rotation of the tapered needle during its feed towards the chuck, and configured to restrict transmitting torque to the chuck during reverse rotation of the tapered needle during its retraction away from the chuck.
